# NOUVEAU FASCICULE DE BREVET EUROPEEN

(11) **EP 0 974 555 B2**
(45) Date de publication et mention de la décision concernant l'opposition: **18.02.2009**
(45) Mention de la délivrance du brevet: 05.11.2003
(21) Numéro de dépôt: 99401783.8
(22) Date de dépôt: 15.07.1999
(51) Int. Cl.: C01B 37/00, C01F 7/34, C01F 7/02

(54) **Procédé de synthèse d'alumines en milieu basique**
Verfahren zur Synthese von Aluminiumoxiden in alkalischem Medium
Synthesis process of aluminas in a basic medium

(30) Priorité: 22.07.1998 FR 9809390
(43) Date de publication de la demande: 26.01.2000
(73) Titulaire: Institut Français du Pétrole, 92500 Rueil Malmaison (FR)
(72) Inventeur: Guth, Jean-Louis, 68200 Mulhouse (FR); Valange, Sabine, 5590 Eignon (BE); Gabelica, Zélimir, 43000 Warenne-Oleye (BE); Kolenda, Frédéric, 69630 Chaponost (FR); Lacombe, Sylvie, 92500 Rueil Malmaison (FR)
(74) Mandataire: Boulinguiez, Didier

(56) Documents cités:
- EP-A- 0 714 851
- EP-A- 0 775 520
- WO-A-96/39357
- US-A- 4 579 729
- ANDREAS STEIN ET AL: "Aluminium-containing mesostructural materials" JOURNAL OF POROUS MATERIALS, vol. 3, no. 2, 1996, pages 83-92, XP002083327
- QISHENG HUO ET AL: "ORGANIZATION OF ORGANIC MOLECULES WITH INORGANIC MOLECULAR SPECIES INTO NANOCOMPOSITE BIPHASE ARRAYS" CHEMISTRY OF MATERIALS, vol. 6, no. 8, 1 août 1994 (1994-08-01), pages 1176-1191, XP000573966
- M YADA ET AL: "Synthesis and deorganization of an aluminium-based dodecyl sulfate mesophase with a hexagonal structure" CHEMICAL COMMUNICATIONS,1996, page 769 769 XP002075632
- VAUDRY F ET AL: "SYNTHESIS OF PURE ALUMINA MESOPOROUS MATERIALS" CHEMISTRY OF MATERIALS, vol. 8, no. 7, juillet 1996 (1996-07), pages 1451-1464, XP000626883
- TANEV P T ET AL: "A NEUTRAL TEMPLATING ROUTE TO MESOPOROUS MOLECULAR SIEVES" SCIENCE, vol. 267, no. 5199, 10 février 1995 (1995-02-10), pages 865-867, XP000573988

## Description

L'invention concerne le domaine des alumines à porosité contrôlée et en outre un procédé de synthèse d'alumines à porosité contrôlée en milieu basique.

Ces matériaux se caractérisent par leur volume poreux, leur surface spécifique et leur spectre de diffraction de rayons X. Ces matériaux présentent une importante capacité adsorbante, ils sont le plus souvent utilisés comme supports de catalyseur, adsorbants, moyens de séparation.

La préparation d'oxydes à porosité contrôlée repose sur le fait que des molécules organiques classées comme tensioactifs peuvent s'associer entre elles, en particulier, lorsqu'elles sont placées dans les conditions de synthèse d'oxydes à porosité contrôlée. Elles forment ainsi des micelles qui présentent des charges électriques de surface et une géométrie variables suivant les conditions du milieu de synthèse.

Ces micelles peuvent à leur tour structurer autour d'elles des espèces polymériques d'oxydes minéraux tels que la silice, l'alumine ou d'autres métaux tel que le titane, et générer ainsi un réseau solide mésoporeux.

Dans le brevet WO 96/39357, une voie complémentaire utilisant des tensioactifs non-ioniques tels que des oxydes de polyéthylène et des précurseurs neutres d'oxydes inorganiques comme sources de réactifs est décrite. Cette synthèse est effectuée dans un solvant organique. Cette méthode permet en outre une élimination aisée du tensioactif. Des oxydes inorganiques poreux sont préparés par cette voie à partir de tensioactifs non-ioniques.

Dans les travaux qui ont pour principe de base l'hydrolyse contrôlée de précurseurs aluminiques organiques de type Al(OR')₃ ou R' est un groupe alkyle linéaire ou branché contenant de 1 à 5 atomes de carbone, on distingue le cas où le structurant est du type ammonium quaternaire, le milieu est alors de type mixte eau-alcool et le cas où le structurant est du type micellaire, la réaction est alors effectuée dans un solvant organique. Vaudry et Davis dans Chem. Mater., 1996, p.1451 utilisent des tensioactifs de type acide gras. S. Bagshaw, T.J. Pinnavaia, dans Mesoporous alumina molecular sieves, Angew. Chem. Intl. Ed. Engl 1996, 35; 10, p.1102-1105 décrivent l'obtention de phases lamellaires.

Lorsque le structurant est du type ammonium quaternaire R₄N⁺, on observe généralement sur le diagramme de diffraction X une seule diffraction diffuse en dessous de 2 Θ = 5° (CuKα) indiquant qu'on est en présence d'une mésostructure avec un arrangement périodique à courte distance. Avec des tensioactifs micellaires, le diagramme de diffraction des rayons X présente généralement une raie correspondant à une distance interréticulaire strictement supérieure à 3 nanomètres indiquant un arrangement périodique à plus grande distance.

Une alumine mésoporeuse de structure hexagonale a été synthétisée à partir d'espèces Al³⁺ en présence de dodecylsulfate de sodium, cette synthèse est décrite dans le document : M. Yada, M. Machida, T. Kijima, "Synthesis and deorganization of an aluminium-based dodecyl sulfate mesophase with a hexagonal structure", Chem. Commun., 1996, 769-770. Cette méthode nécessite la mise en oeuvre d'importantes quantités d'urée dont la décomposition conduit à une augmentation lente du pH lors du chauffage prolongé. On hydrolyse ainsi des cations Al³⁺, ce qui permet leur polycondensation en une phase lamellaire puis en une phase hexagonale lorsque le pH est supérieur à 7. Cette structure est conservée après la calcination du produit non lavé mais aucune donnée sur l'existence d'une porosité contrôlée n'est mentionnée.

A.S. Stein, B. Holland, dans "Aluminium containing mesostructural materials", J. Porous Materials, 1996, 3, 83-92 synthétisent une alumine à partir de polycations de type Keggin à base d'aluminium Al₁₃ en présence de dodecylsulfate. Mais après le traitement thermique pour éliminer le tensioactif, le solide obtenu présente une surface spécifique obtenue par la méthode BET très faible de 18 m²/g.

Dans la présente description, on utilisera l'abréviation "nm" pour nanomètre c'est-à-dire 10⁻⁹ mètre.

L'invention concerne un procédé de synthèse d'alumines à porosité contrôlée telle que le diamètre des pores est compris entre 0,6 nm et 80 nm.
Ce procédé est présenté dans la revendication 4. Il se déroule en plusieurs étapes parmi lesquelles au moins une étape a) dans laquelle on prépare un précurseur de l'alumine par hydrolyse d'au moins une source inorganique anionique de l'aluminium en présence d'au moins un tensioactif. L'étape a) du procédé est réalisée dans un milieu essentiellement aqueux dont le pH est supérieur au point isoélectrique de l'alumine. Le procédé selon l'invention comprend aussi au moins une étape b) dans laquelle le précipité obtenu est séché à l'air à une température d'environ 40°C à environ 110°C pendant une durée d'environ 2 à 30 heures, et au moins une étape c) dans laquelle le précipité séché est calciné à une température suffisante pour éliminer les molécules de tensioactifs présentes dans le précurseur. L'hydrolyse de la source inorganique de l'aluminium est généralement effectuée avec un composé présentant une fonction acide.

La présente invention concerne aussi des alumines à porosité contrôlée dont le diamètre des pores est compris entre 0,6 nm et 80 nm, cette invention concerne aussi le composé hydraté (brut de synthèse) obtenu avant la calcination.

Parmi les avantages du procédé selon l'invention, on peut noter que : la mise en oeuvre du procédé se fait avec des sources inorganiques d'aluminium peu onéreuses et faciles à utiliser, dans un milieu peu polluant et peu onéreux où le solvant majoritaire, et souvent unique, est l'eau.

La porosité des matériaux peut être contrôlée à l'aide des paramètres principaux suivants : la nature de la source inorganique d'aluminium, la nature du ou des tensioactifs ainsi que la nature des éventuels composés organiques utilisés comme additifs -le rôle de ces additifs étant alors de modifier les tensioactifs- la nature et la quantité du modificateur de pH, la valeur du pH du milieu où se forme le précurseur, la procédure de calcination utilisée pour éliminer les tensioactifs. Ces paramètres principaux ne sont pas les seuls facteurs qui interviennent, la température, la durée de formation du précurseur peuvent aussi avoir une incidence sur les caractéristiques de la porosité finale.

Suivant une étape a) du procédé de synthèse selon l'invention, on fait réagir au moins une source inorganique anionique de l'aluminium avec au moins un tensioactif.
La réaction est effectuée à un pH supérieur au point isoélectrique de l'alumine et inférieur à 14. Cependant, selon la concentration et la nature des différentes espèces en solution il faudra dans certains cas travailler à un pH nettement supérieur au point isoélectrique, alors que dans d'autres cas il suffira de s'écarter un tout petit peu dudit point isoélectrique pour réaliser la synthèse suivant le procédé selon la présente invention. Ainsi, selon les cas, la valeur minimale du pH du milieu de synthèse pourra être comprise entre 8 et 10.

La source inorganique de l'aluminium est introduite dans le mélange sous forme anionique l⁻. La solution contient au moins des tensioactifs cationiques S⁺ et des tensioactifs anioniques S⁻. La quantité de tensioactifs anioniques ajoutée est telle que la charge totale du mélange des tensioactifs ne devienne pas négative, la charge de la surface inorganique restant négative, on suit un mécanisme de type S⁺l⁻. Cependant, selon le pH de la solution et notamment lorsque le pH est voisin du point isoélectrique, les charges positives de la surface de la source d'aluminium l⁺ peuvent devenir majoritaires, les micelles peuvent alors produire des interactions de type S⁺X⁻l⁺ où X⁻ est l'anion de compensation du tensioactif présent dans le milieu de synthèse.

Sans vouloir être lié à aucune théorie, on peut penser que les tensioactifs contrôlent la polycondensation des précurseurs inorganiques par des interactions multiples telles que des interactions covalentes notée S-l, des interactions ioniques de type «pont hydrogène» S°I°, des interactions entre des espèces chargées S⁻l⁺ et S⁺l⁻. Ces interactions dépendent de la nature des tensioactifs et du pH du milieu aqueux. Les interactions sont de façon majoritaire du type S⁺l⁻ si on utilise des tensioactifs cationiques, à ces interactions électrostatiques peuvent s'ajouter des interactions S-I ou S°I° si on associe des tensioactifs non ioniques aux micelles précédentes. Il est aussi possible de contrôler la polycondensation par des interactions uniquement de type S°I° (ou S-I) en utilisant des tensioactifs non ioniques. Dans le cas où l'on ajoute des tensioactifs cationiques S', on a aussi en présence des interactions de type S⁻l⁺. Si on se trouve à un pH voisin du point isoélectrique, on peut également être en présence d'interactions de type S⁺X⁻l⁺.

Le procédé selon l'invention est mis en oeuvre dans un milieu majoritairement aqueux dont le pH favorise de préférence la formation sur la surface du matériau inorganique de charges négatives de façon majoritaire par rapport aux charges positives, ces surfaces chargées négativement sont obtenues de préférence en présence de micelles globalement positives, la somme des interactions entre les espèces chargées S⁺l⁻ étant le plus souvent supérieure à la somme des interactions entre les espèces chargées S⁻l⁺. Le pH du milieu réactionnel est généralement compris entre 8 et 14, de préférence compris entre 9 et 13 et de façon encore plus préférée entre 9 et 12.

Dans une étape c), après avoir séché lors d'une étape b) le précipité obtenu à l'étape a), on effectue une calcination à une température suffisante pour éliminer les molécules de tensioactifs présentes dans le précurseur, la température de calcination est généralement d'environ 400°C à 600°C. De préférence, l'étape de calcination est effectuée en augmentant progressivement la température pendant une période d'environ 2 à 6 heures jusqu'à la température de calcination puis en maintenant la température de calcination pendant une période de 1 à 4 heures, sous atmosphère inerte, par exemple l'azote. La calcination peut aussi être effectuée par calcination flash à une température d'environ 400°C à 600°C dans un milieu qui contient de l'oxygène, par exemple l'air.

Le produit obtenu par le procédé selon l'invention présente les caractéristiques suivantes une porosité contrôlée telle que le diamètre des pores est compris entre 0,6 nm et 80 nm, une surface spécifique mesurée par la méthode BET généralement d'environ 100 à 1000 m²/g, de préférence d'environ 350 à 800 m²/g et un volume poreux total compris entre 1,00 et 3,00 cm³/g.

L'invention concerne aussi de façon particulière les alumines à porosité contrôlée, le diamètre des pores étant compris entre 0,6 nm et 80 nm, ces alumines présentant un volume poreux total compris entre 1,00 cm³/g et 3,00 cm³/g. Les alumines selon la présente invention présentent une répartition telle que la taille moyenne des pores se situe entre 0,6 nm et 80 nm, de préférence entre 1,5 nm et 50 nm Ces alumines présentent un volume poreux total compris entre 1,00 cm³/g et 3,00 cm³/g et de manière préférée compris entre 1,00 cm³/g et 2,00 cm³/g.
Par ailleurs, les alumines selon la présente invention sont caractérisées par un diagramme de diffraction des rayons X présentant un signal intense situé à un déplacement correspondant à un angle de diffraction 2 Θ (thêta) inférieur à 5°.

L'étape a) du procédé de synthèse selon l'invention dans laquelle on fait réagir, généralement en présence d'un composé présentant une fonction acide, au moins une source inorganique anionique de l'aluminium avec au moins un tensioactif cationique et au moins un tensioactif anionique peut aussi être effectuée en présence d'un ou plusieurs composés organiques. Plus particulièrement, lorsqu'on utilise un tensioactif sous forme micellaire, ces composés organiques ont pour rôle de modifier les caractéristiques des micelles, leur forme, leur dimension. Il s'agit essentiellement de molécules non polaires ou peu polaires dont l'insertion dans la partie hydrophobe des micelles ou dans le domaine séparant la partie hydrophile de la partie hydrophobe des micelles modifie leur diamètre et leur rayon de courbure.

D'une manière générale, la mise en oeuvre du procédé selon l'invention est effectuée comme suit : on prépare une solution aqueuse A contenant au moins un tensioactif cationique et au moins un tensioactif anionique. A cette solution A est ajoutée une source inorganique anionique de l'aluminium, cette source inorganique peut se présenter sous forme d'une solution B ou sous forme d'une poudre.
La solution A contient au moins un tensioactif cationique et on ajoute au moins un tensioactif anionique de façon telle que la charge totale du mélange de tensioactifs ne devienne pas négative. Selon les espèces en présence, le pH de la solution B peut être très basique, la solution A quant à elle contient généralement un composé présentant une fonction acide qui est ajouté en quantité telle que le mélange final ait un pH compris entre 8 et 14, de préférence compris entre 9 et 13 et de façon encore plus préférée entre 9 et 12.

La solution A peut aussi éventuellement contenir un composé organique destiné à modifier les caractéristiques des micelles (leur forme, leur dimension) ainsi que la solubilité des micelles dans le milieu aqueux. L'aluminate est ajouté en une seule fois et sous forte agitation à la solution A. Le précipité qui résulte de ces mélanges est maintenu sous agitation pendant une durée variable de quelques minutes à quelques heures, de préférence d'environ 15 minutes à 2 heures. Pendant cette durée, on maintient le milieu réactionnel dans les conditions dans lesquelles le mélange a été effectué. En ce qui concerne la température, elle est d'environ 15°C à 90°C, de préférence d'environ 15°C à 60°C.
Les alumines à porosité contrôlée telle que le diamètre des pores est compris entre 0,6 nm et 80 nm et présentant un volume poreux total compris entre 1,00 cm³/g et 3 cm³/g selon la présente invention sont obtenues suivant le procédé de synthèse de la présente invention en utilisant un mélange de tensioactifs, ce mélange comprenant des tensioactifs anioniques et cationiques, les tensioactifs cationiques étant alors présents de façon majoritaire par rapport aux tensioactifs anioniques.

On ne sortirait pas du cadre de la présente invention en ajoutant une solution acide préparée séparément sous forme d'une solution C. Cette solution C est alors ajoutée à la solution A en une seule fois sous forte agitation en même temps que la solution B (ou le composé B) ou après l'ajout de cette solution B (ou du composé B). Si on choisit d'utiliser une voie de synthèse qui emploie une solution C, la solution A -avant ajouts- ne contient pas de composés présentant une fonction acide. Cette variante du procédé selon l'invention peut être utile lorsqu'il n'est pas possible d'obtenir une dissolution complète du ou des tensioactifs dans la solution A en présence d'un composé présentant une fonction acide. D'autres variantes de la présente invention sont mises en oeuvre pour accroître la solubilité du ou des tensioactifs, ces 5 variantes consistent à chauffer la solution A à une température d'environ 30 °C à 90 °C ou à remplacer en partie l'eau contenue dans la solution A par au moins un composé organique miscible avec l'eau et dans lequel le ou les tensioactifs sont plus solubles. Dans tous les cas le milieu solvant reste majoritairement aqueux, la quantité de composés organiques étant d'environ 0,001 à 20% en masse par rapport à la masse totale de solvant.

Après réaction, le précipité est isolé par un moyen approprié de filtration ou de centrifugation, le précipité est ensuite lavé à l'eau et séché sous air à une température d'environ 40°C à 110°C jusqu'à l'obtention d'une masse constante du précipité, le plus souvent la durée de séchage est d'environ 2 heures à 30 heures et de préférence d'environ 10 heures à 20 heures. A l'issue de ces traitements, on obtient un précurseur de l'alumine à porosité contrôlée.

Le tensioactif est contenu dans le réseau poreux du précurseur de l'alumine. Ce solide hydraté (brut de synthèse) est caractérisé par un diagramme de diffraction des rayons X présentant un signal intense situé à un déplacement correspondant à un angle de diffraction 2 Θ (thêta) inférieur à 5°.
La formule chimique de ce précurseur s'écrit :

n S, m X, Al₂O₃, y H₂O

avec 0,01 < n < 2 ; 0,001 < m < 0,2 ; 0,5 < y < 6

S est le tensioactif et X l'anion apporté par la solution acide.
L'anion X est par exemple au moins un anion choisi dans le groupe formé par F, Cl⁻, SO₄²⁻, PO₄³⁻,NO₃⁻, RCOO⁻ où R est un groupe alkyle.

Ce précurseur de l'alumine est ensuite calciné à une température suffisante pour éliminer les structurants présents dans l'espace poreux.

D'une manière plus particulière, le composé B -éventuellement mis en solution- est un composé choisi dans le groupe formé par les aluminates de métaux alcalins tel que l'aluminate de sodium, l'aluminate de potassium. Le pH de la solution est généralement d'environ 10 à 14. La concentration en aluminium de la solution B se situe généralement entre 0,01 mol/l et 5 mol/l et de préférence entre 0,1 mol/l et 1 mol/l.

Les tensioactifs cationiques présents dans la solution A utilisée dans le procédé selon la présente invention sont généralement choisis dans le groupe formé par les sels d'alkyl-ammonium, les sels d'alkylphosphonium, les sels d'alkylsulfonium.

Les tensioactifs non-ioniques éventuellement présents dans la solution A utilisée dans le procédé selon la présente invention sont généralement choisis dans le groupe formé par les oxydes d'alkylpolyéthylène, les oxydes d'alkylphényl-polyéthylène, les oxydes d'alkyl-phosphine et les oxydes d'alkyl-amine.

Les tensioactifs anioniques présents dans la solution A utilisée dans le procédé selon la présente invention, sont généralement choisis dans le groupe formé par les alkyl-carboxylates, les alkyl-sulfates, les alkyl-sulfonates, les alkylphényl-sulfonates, les alkyl-phosphates et les alkyl-phosphonates.

On ne sortirait pas du cadre de la présente invention en utilisant des tensioactifs où coexistent plusieurs fonctions soit des tensioactifs amphotériques où coexistent les fonctions anioniques et cationiques, soit des tensioactifs où coexistent les fonctions anioniques et non-ioniques comme la C-betaïne, la N-betaïne, un sulfate d'alkylpolyoxyéthylène ou un sulfonate d'alkylpolyoxyéthylène.

Les composés organiques qui peuvent éventuellement être ajoutés à la solution A sont généralement des molécules non polaires ou peu polaires, ces composés organiques sont choisis parmi : les alcanes dont la chaîne contient entre 5 et 20 atomes de carbone par molécule, de préférence on utilisera le nonane ou le décane, les hydrocarbures aromatiques substitués par un ou plusieurs groupes hydrocarbonés, de préférence on utilisera le mésitylène, les alcools aliphatiques dont la chaîne contient entre 5 et 20 atomes de carbone par molécule, de préférence on utilisera le n-octanol ou les amines aliphatiques dont la chaîne contient entre 5 et 20 atomes de carbone par molécule de préférence on utilisera les hexylamines.

La concentration des tensioactifs dans les solutions A dépend de leur nature c'est-à-dire de leur solubilité et de leur concentration micellaire critique. Lorsque la solution A est une solution aqueuse, la concentration en tensioactifs de la solution A est généralement d'environ 0,01 mol/l à 2 mol/l. Lorsque la solution A est un mélange d'eau et d'un composé organique, la concentration en tensioactifs de la solution A est généralement d'environ 0,02 mol/l à 3 mol/l.

Le rapport du nombre de moles de tensioactifs sur le nombre de moles d'aluminium dans le mélange A+B est souvent d'environ 0,01 à 1,5 et de préférence d'environ 0,10 à 0,80.

Le composé présentant une fonction acide ajouté est de préférence choisi dans le groupe formé par les acides minéraux ou organiques monovalents par exemple : l'acide chlorhydrique (HCI), l'acide nitrique (HNO₃), l'acide fluorhydrique (HF) ou l'acide acétique (CH₃CO₂H) les acides minéraux ou organiques divalents par exemple l'acide sulfurique (H₂SO₄), ou trivalents par exemple l'acide phosphorique (H₃PO₄), par les sels dérivées de bases faibles par exemple, le chlorure d'ammonium (NH₄Cl), le sulfate d'ammonium , ou le phosphate d'ammonium, par des sels acides d'aluminium (sulfate, nitrate d'aluminium), par des solutions acides d'oxydes telle que l'acide silicique. L'anion de cet acide est noté X.
La concentration de l'acide choisi est de préférence une fois molaire (1M). Ce composé présentant une fonction acide est choisi en fonction de la nature de la source d'aluminium c'est-à-dire du taux d'hydrolyse de cette source d'aluminium et du pH souhaité.

Les alumines obtenues sont caractérisées par un isotherme d'adsorption et de désorption de l'azote, un diagramme de diffraction aux rayons X et un spectre de résonance magnétique nucléaire (RMN) de l'aluminium ²⁷Al avec rotation à l'angle magique.

L'isotherme d'adsorption et de désorption de l'azote permet de calculer la surface spécifique par la méthode BET décrite dans J. Am. Chem. Soc. 73 p 373-380 (1951). On peut aussi déterminer un volume poreux total, un volume poreux des pores dans une gamme représentative du matériau étudié et un diamètre moyen des pores par la méthode BJH décrite dans J. Am. Chem. Soc 60 p. 309-319 (1938).
Par le spectre de résonance magnétique nucléaire (RMN) de l'aluminium ²⁷Al avec rotation à l'angle magique, on peut connaître la coordinence de l'aluminium dans la structure. Les spectres RMN sont obtenus en prenant comme référence une solution aqueuse de nitrate d'aluminium.

Les diagrammes de diffraction des rayons X permettent de déterminer la distance interréticulaire "d" des composés synthétisés. Le diffractomètre aux rayons X utilisé est du type Phillips PW 1130 et le spectromètre de résonance magnétique nucléaire est du type Bruker DSX 400.

Les exemples qui suivent illustrent l'invention sans en limiter la portée.

### EXEMPLE 1 (COMPARATIF)

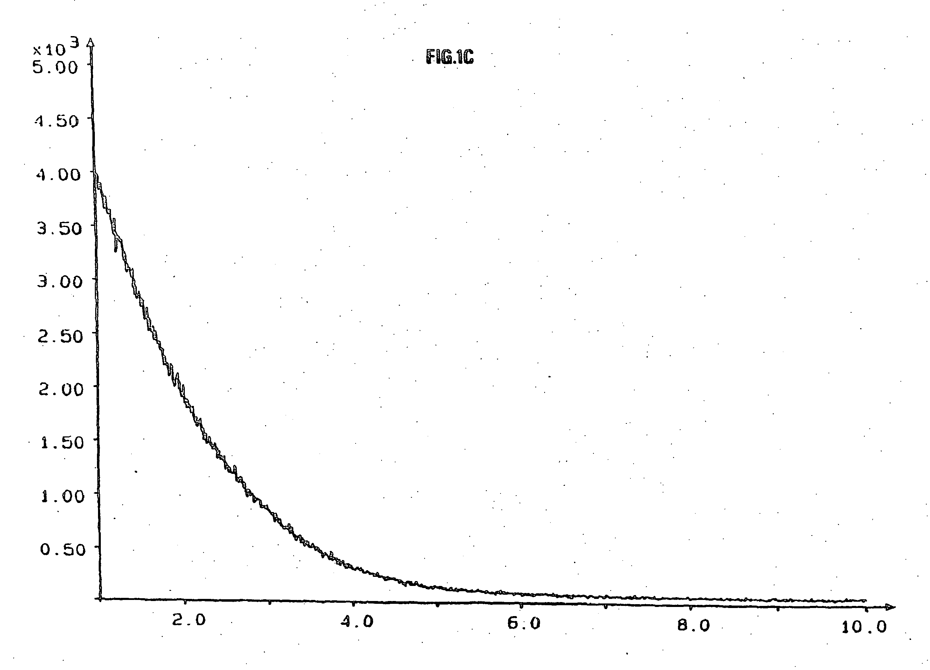

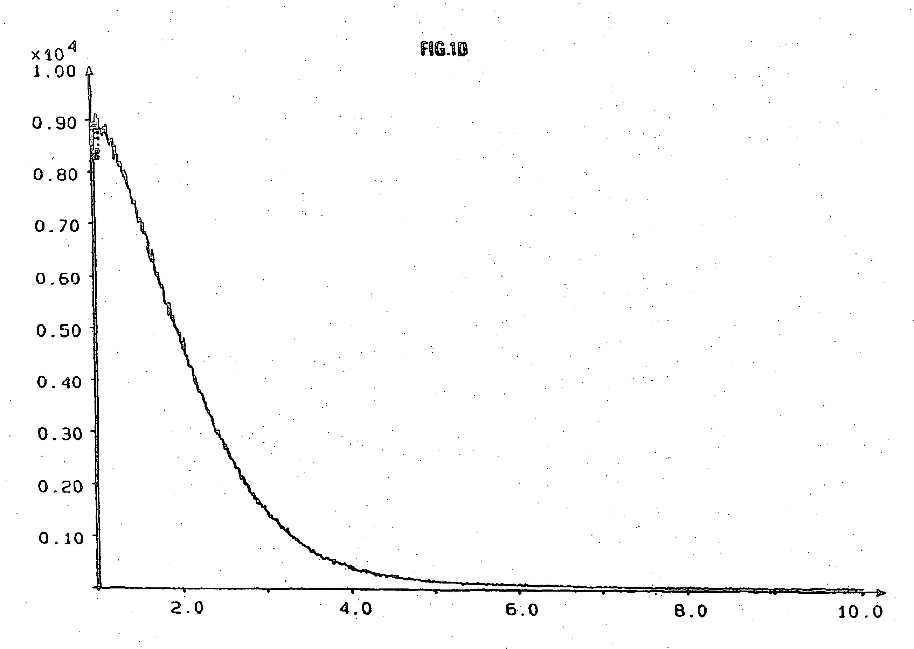

Une solution A est obtenue par dissolution de 7,28 g de bromure d'hexadécyltriméthylammonium dans 100 ml d'eau par chauffage à 50° C. On verse ensuite dans cette solution 4,2 g d'aluminate de sodium. Une solution C est obtenue par chauffage de 50 ml de HCI 1M à 50° C. On verse en une fois la solution C dans la solution A contenant l'alminate sous agitation vigoureuse. Le pH se stabilise vers 10. On laisse évoluer le mélange sous forte agitation à 50° C pendant 15 minutes.
On filtre le produit obtenu, on le lave à l'eau puis on le sèche pendant 15 heures à 60° C sous pression atmosphérique.
1 g de ce précurseur est calciné sous azote : l'augmentation progressive de la température jusqu'à 450°C est effectuée sur une période de 3 heures puis on maintient cette température pendant 2 heures.
Sur le diagramme de diffraction des rayons X du composé brut de synthèse (figure 1c), aucun pic n'est observable aux faibles valeurs d'angle (2θ < 5°), seule une diffusion centrale plus ou moins prononcée est visible ; cependant après calcination à 450° C sous azote le pic semble plus marqué (figure 1d).

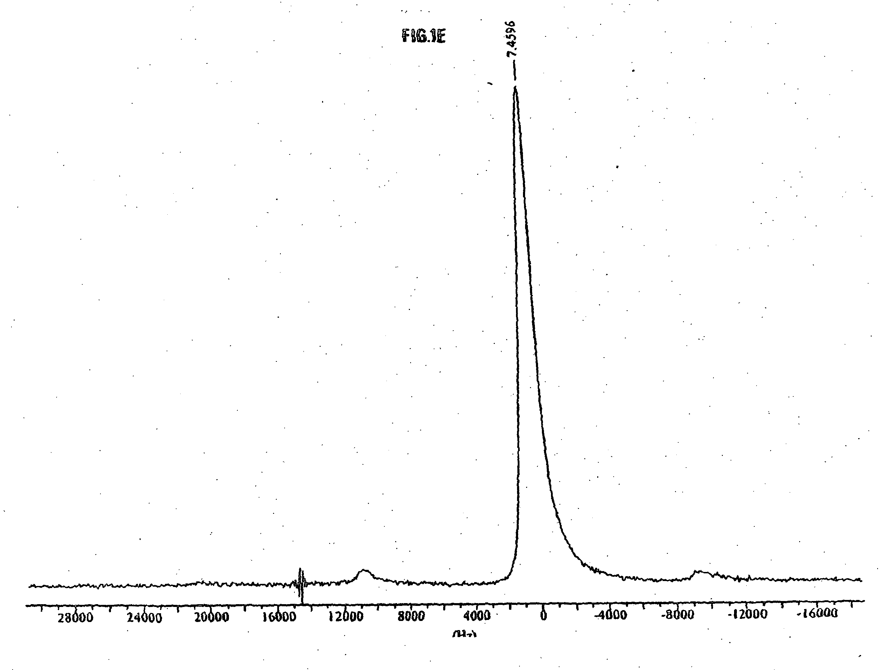

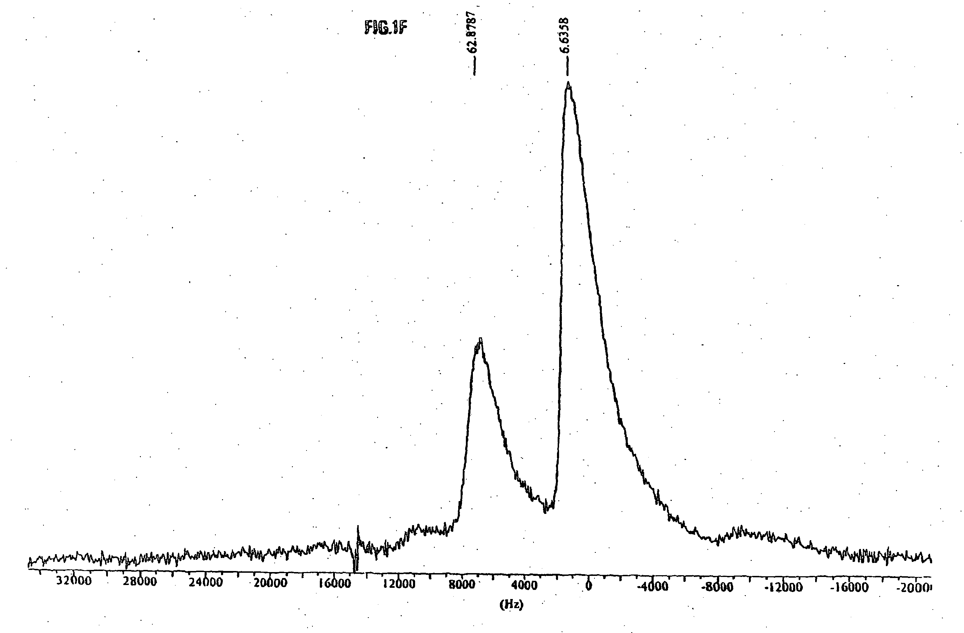

Le spectre RMN du matériau brut de synthèse (figure 1e) présente un pic situé à 7,5 ppm caractéristique de la présence de sites aluminiques octaédriques. Le spectre RMN du matériau obtenu après calcination (figure 1f) présente deux pics, l'un situé à 62,9 ppm est caractéristique de la présence de sites aluminiques tétraédriques, l'autre situé à 6,6 ppm est caractéristique de la présence de sites aluminiques octaédriques.

A partir de l'isotherme d'adsorption et de désorption de l'azote, on peut déterminer la surface spécifique par la méthode BET, le volume poreux total, le diamètre moyen des pores de diamètre compris entre 1,7 nm et 30 nm et le volume poreux des pores de diamètre compris entre 1,7 nm et 30 nm, ces caractéristiques sont consignées dans le tableau 1.

**Tableau 1**

| | |
|---|---|
| Surface BET | 548 m²/g |
| Volume poreux total | 0,82 cm³/g |
| Diamètre moyen des pores compris entre 1,7 nm et 30 nm | 4,2 nm |
| Volume poreux des pores compris entre 1,7 nm et 30 nm | 0,80 cm³/g |

### EXEMPLE 2 (SELON L'INVENTION).

Une solution B est obtenue par dissolution de 2,1 g d'aluminate de sodium dans 10 ml d'eau par chauffage à 50° C. Une solution A est obtenue par dispersion de 0,55 g de palmitate de sodium dans 25 ml d'eau par chauffage à 50° C, dans laquelle on ajoute 2,91 g de bromure d'hexadécyltriméthylammonium préalablement dissout dans 15 ml d'eau par chauffage à 50° C. Une solution C est obtenue par chauffage de 24 ml de HCI (1 M) à 50° C. On verse la solution A dans la solution B sous agitation vigoureuse, puis on ajoute ensuite la solution C. Le pH se stabilise vers 10. On laisse évoluer le mélange sous forte agitation à 50° C pendant 15 minutes. On filtre le produit obtenu, on le lave à l'eau puis on le sèche pendant 15 heures à 60° C sous pression atmosphérique. 1 g de ce précurseur est calciné sous azote : l'augmentation progressive de la température jusqu'à 450°C est effectuée sur une période de 3 heures puis on maintient cette température pendant 2 heures.

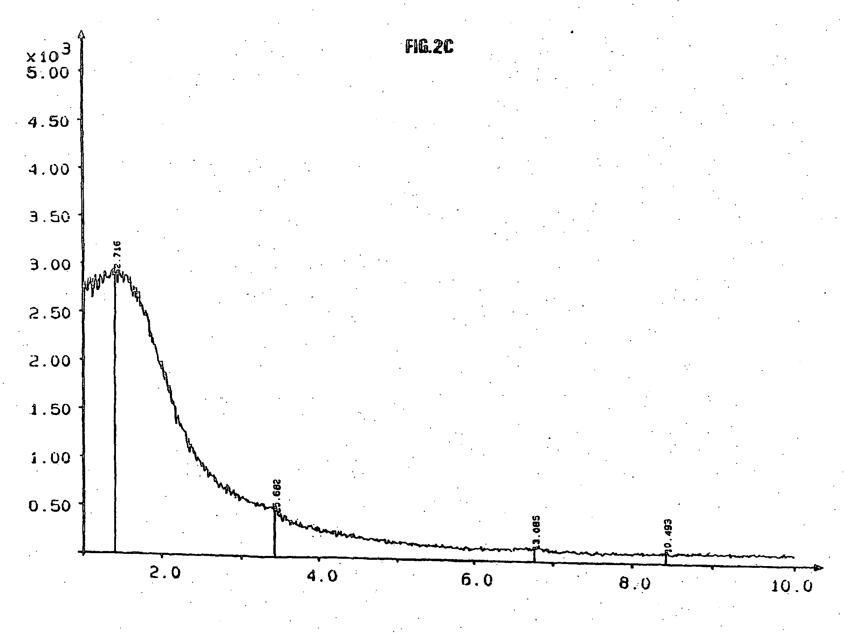

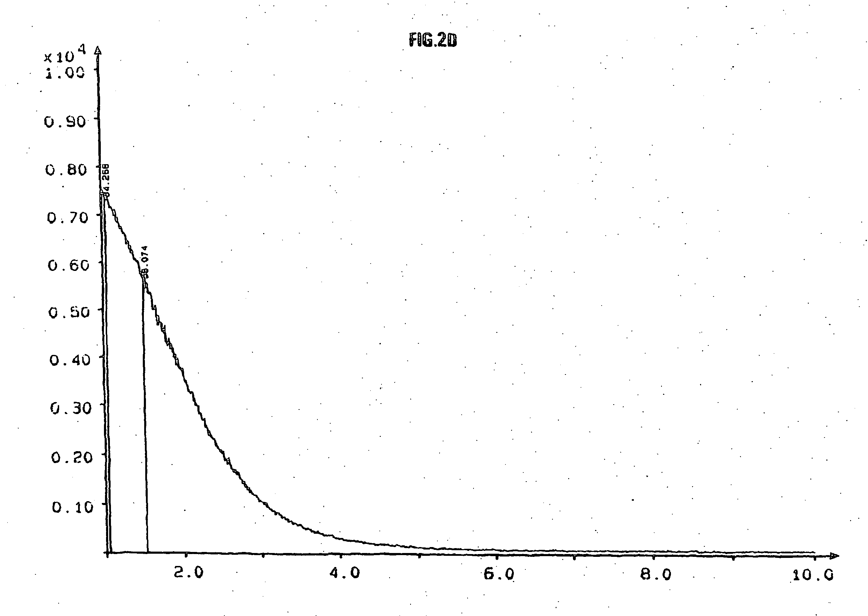

Sur le diagramme de diffraction des rayons X du composé brut de synthèse (figure 2c), on observe une large raie intense qui correspond à une distance inter-réticulaire « d » de 6,3 nm (62,7Å). Mais après calcination sous azote à 450° C, on observe un déplacement vers les faibles valeurs d'angle (2θ < 1°), ce qui se traduit par l'apparition d'une forte diffusion centrale (figure 2d).

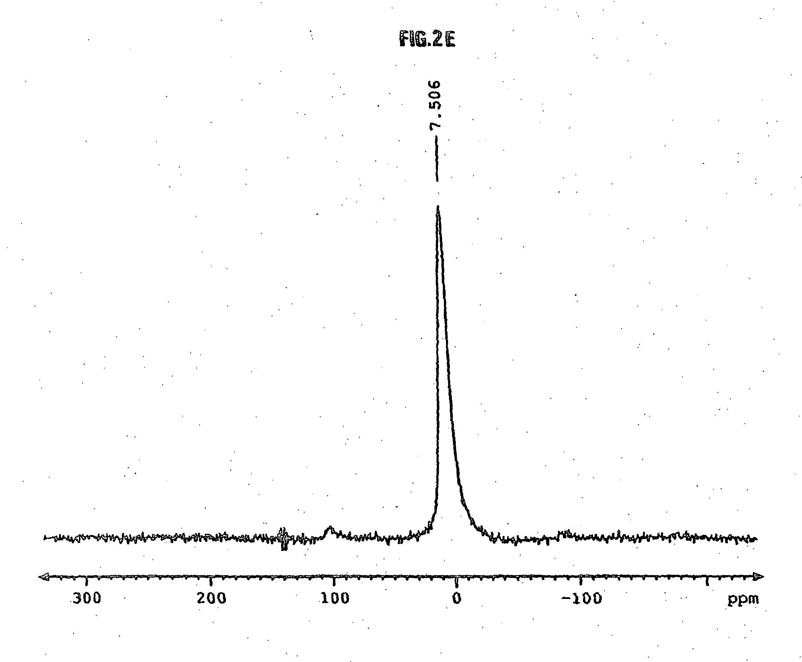

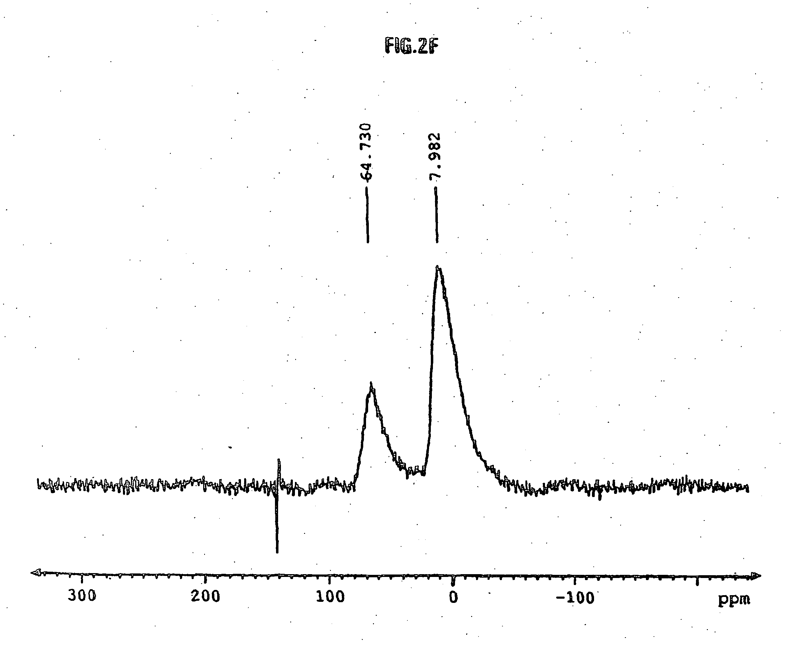

Le spectre RMN du matériau brut de synthèse (figure 2e) présente un pic situé à 7,5 ppm caractéristique de la présence de sites aluminiques octaédriques. Le spectre RMN du matériau obtenu après calcination (figure 2f) présente deux pics, l'un situé à 64,7 ppm est caractéristique de la présence de sites aluminiques tétraédriques, l'autre situé à 8,0 ppm est caractéristique de la présence de sites aluminiques octaédriques.

A partir de l'isotherme d'adsorption et de désorption de l'azote, on peut déterminer la surface spécifique par la méthode BET, le volume poreux total, le diamètre moyen des pores compris entre 1,7 nm et 80 nm et le volume poreux des pores compris entre 1,7 nm et 80 nm, ces caractéristiques sont consignées dans le tableau 2.

**Tableau 2**

| | |
|---|---|
| Surface BET | 400 m²/g |
| Volume poreux total | 1,44 cm³/g |
| Diamètre moyen des pores compris entre 1,7 nm et 80 nm | 10 nm |
| Volume poreux des pores compris entre 1,7 nm et 80 nm | 1,42 cm³/g |

### EXEMPLE 3 (COMPARATIF)

Une solution A est obtenue par dissolution de 7,28 g de bromure d'hexadécyltriméthylammonium dans 100 ml d'eau par chauffage à 50° C. On verse ensuite dans cette solution 4,2 g d'aluminate de sodium. Une solution C est obtenue par chauffage de 44 ml de HCI 1M à 50° C. On verse en une fois la solution C dans la solution A sous agitation vigoureuse. Le pH se stabilise vers 12. On laisse évoluer le mélange sous forte agitation à 50° C pendant 15 minutes. On filtre le produit obtenu, on le lave à l'eau puis on le sèche pendant 15 heures à 60° C sous pression atmosphérique. 1 g de ce précurseur est calciné sous azote : l'augmentation progressive de la température jusqu'à 450°C est effectuée sur une période de 3 heures puis on maintient cette température pendant 2 heures.

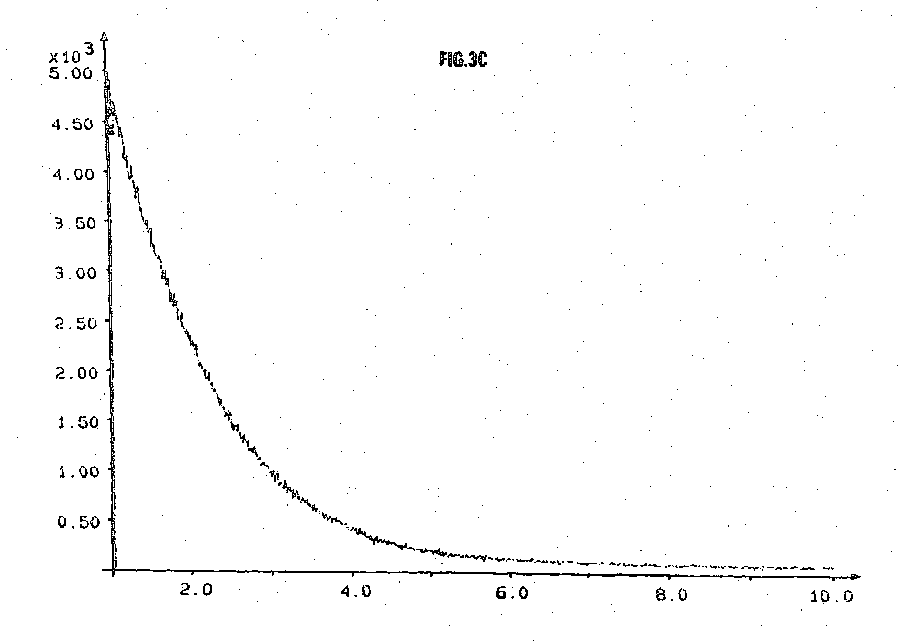

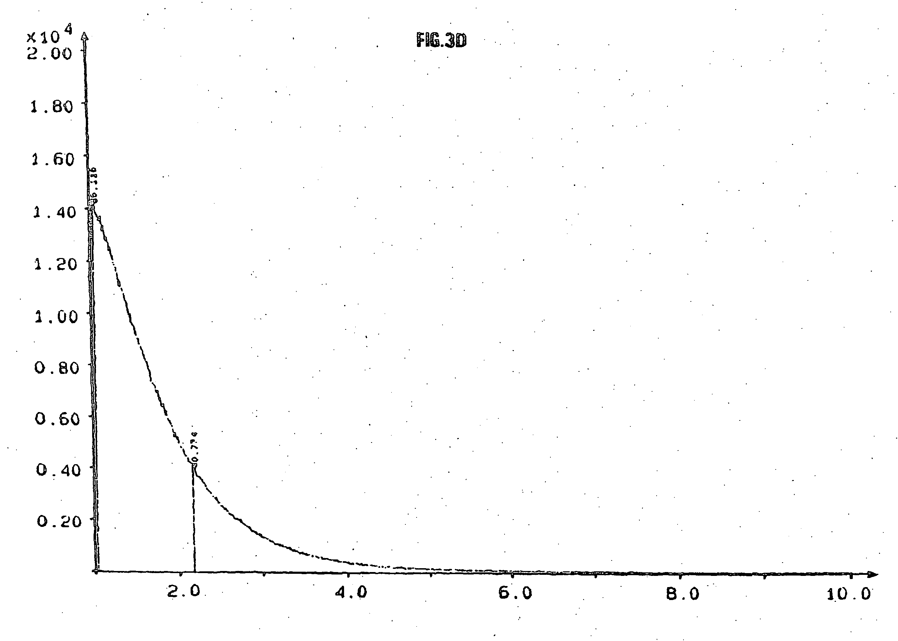

Sur le diagramme de diffraction des rayons X du composé brut de synthèse (figure 3c), aucun pic n'est observable aux faibles valeurs d'angle (2θ < 5°), seule une diffusion centrale plus ou moins prononcée est visible ; cependant après calcination à 450° C sous azote le pic semble plus marqué (figure 3d).

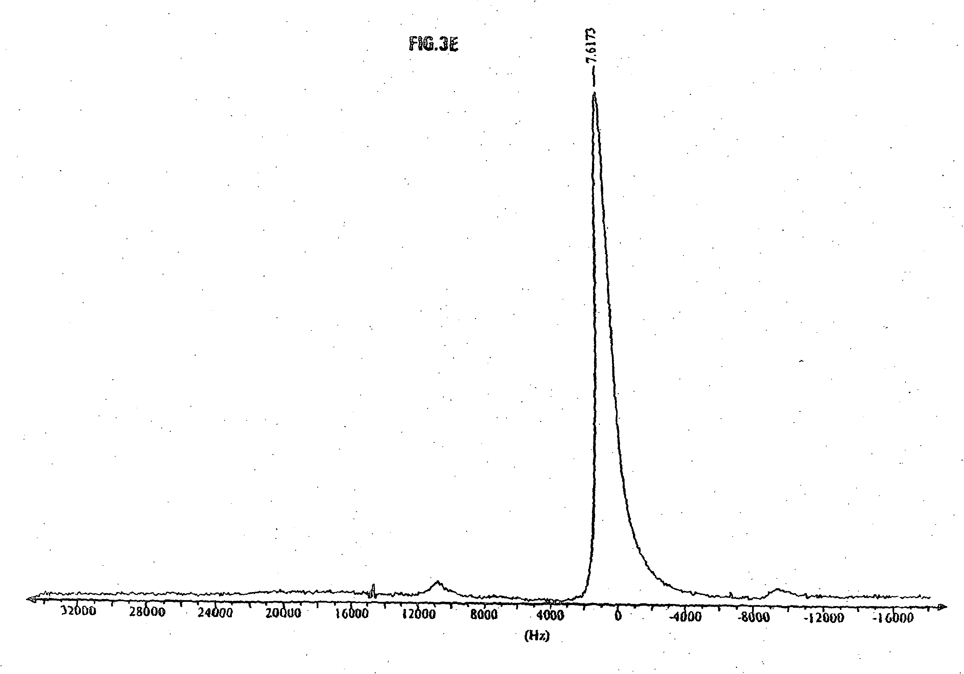

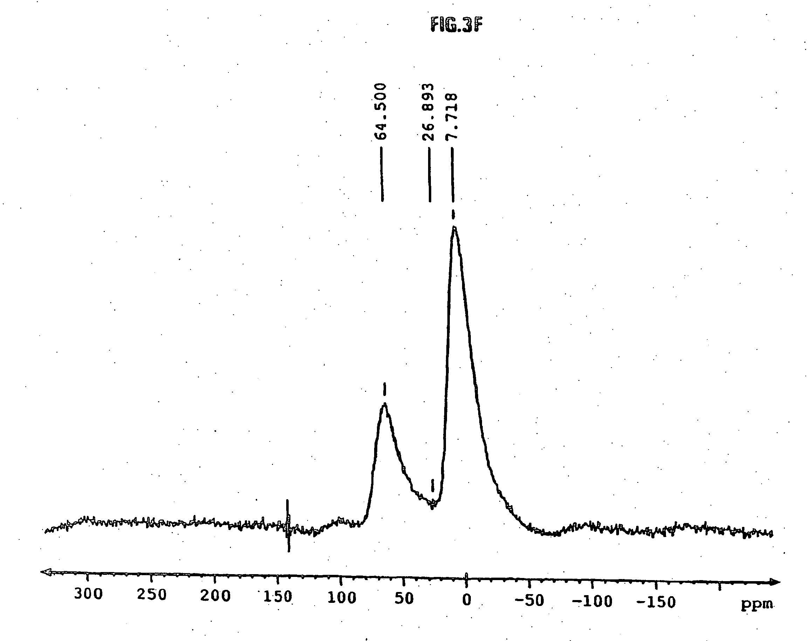

Le spectre RMN du matériau brut de synthèse (figure 3e) présente un pic situé à 7,6 ppm caractéristique de la présence de sites aluminiques octaédriques. Le spectre RMN du matériau obtenu après calcination (figure 3f) présente essentiellement deux pics, le premier situé à 7,7 ppm est caractéristique de la présence de sites aluminiques octaédriques, le deuxième situé à 64,5 ppm est caractéristique de la présence de sites aluminiques tétraédriques.

A partir de l'isotherme d'adsorption et de désorption de l'azote, on peut déterminer la surface spécifique par la méthode BET, le volume poreux total, le diamètre moyen des pores compris entre 1,7 nm et 20 nm et le volume poreux des pores compris entre 1,7 nm et 20 nm, ces caractéristiques sont consignées dans le tableau 3.

**Tableau 3**

| | |
|---|---|
| Surface BET | 403 m²/g |
| Volume poreux total | 0,53 cm³/g |
| Diamètre moyen des pores compris entre 1,7 nm et 20 nm | 3,8 nm |
| Volume poreux des pores compris entre 1,7 nm et 20 nm | 0,51 cm³/g |

### EXEMPLE 4 (SELON L'INVENTION)

Une solution B est obtenue par dissolution de 4,2 g d'aluminate de sodium dans 20 ml d'eau par chauffage à 50° C. Une solution A est obtenue par dispersion de 1,11 g de palmitate de sodium dans 50 ml d'eau par chauffage à 50° C, dans laquelle on ajoute 5,83 g de bromure d'hexadécyltriméthylammonium préalablement dissout dans 30 ml d'eau par chauffage à 50° C. Une solution C est obtenue par chauffage de 45 ml de HCI (1M) à 50° C. On verse la solution A dans la solution B sous agitation vigoureuse, puis on ajoute ensuite la solution C. Le pH se stabilise vers 12. On laisse évoluer le mélange sous forte agitation à 50° C pendant 15 minutes. On filtre le produit obtenu, on le lave à l'eau puis on le sèche pendant 15 heures à 60° C sous pression atmosphérique. 1 g de ce précurseur est calciné sous azote : l'augmentation progressive de la température jusqu'à 450°C est effectuée sur une période de 3 heures puis on maintient cette température pendant 2 heures.

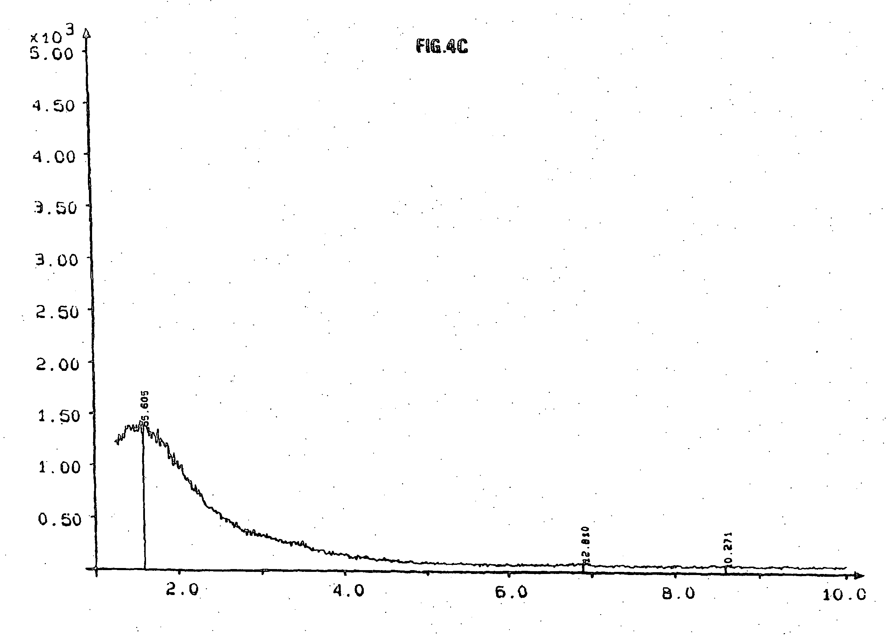

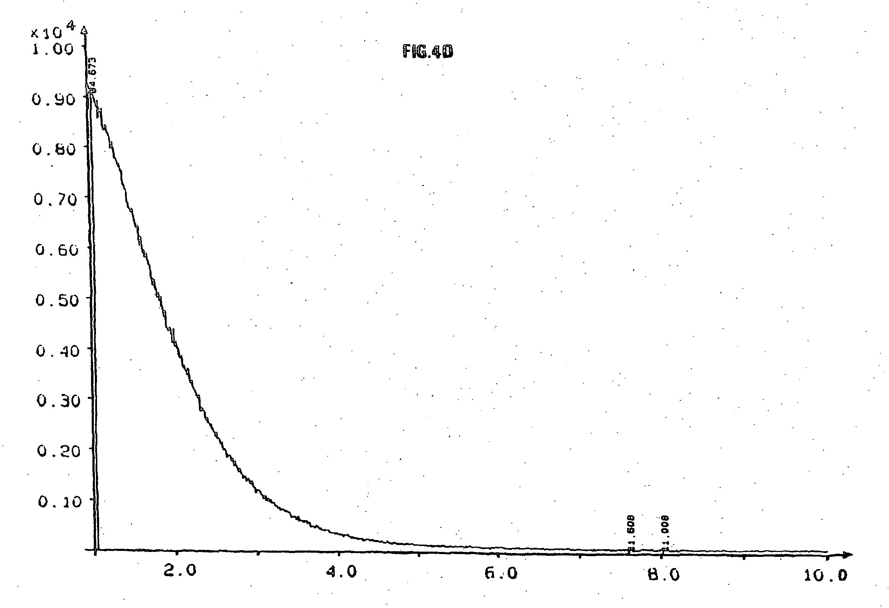

Sur le diagramme de diffraction des rayons X du composé brut de synthèse (figure 4c), on observe une large raie intense qui correspond à une distance inter réticulaire « d » de 6,6 nm (65,6Å). Mais après calcination sous azote à 450° C, on observe un déplacement vers les faibles valeurs d'angle (2θ < 1°), ce qui se traduit par l'apparition d'une forte diffusion centrale (figure 4d).

A partir de l'isotherme de désorption de l'azote, on peut déterminer la surface spécifique par la méthode BET, le volume poreux total, le diamètre moyen des pores compris entre 1,7 nm et 40 nm et le volume poreux des pores compris entre 1,7 nm et 40 nm, ces caractéristiques sont consignées dans le tableau 4.

**Tableau 4**

| | |
|---|---|
| Surface BET | 440 m²/g |
| Volume poreux total | 1,29 cm³/g |
| Diamètre moyen des pores compris entre 1,7 nm et 40 nm | 8,1 nm |
| Volume poreux des pores compris entre 1,7 nm et 40 nm | 1,28 cm³/g |

## Revendications

1. Alumine à porosité contrôlée de diamètre des pores compris entre 0,6 nm et 80 nm telle que son volume poreux total est compris entre 1,00 cm³/g et 3,00 cm³/g et telle que son diagramme de diffraction des rayons X présente un signal intense situé à un déplacement correspondant à un angle de diffraction 2 Θ (thêta) inférieur à 5°.

2. Alumine à porosité contrôlée selon la revendication 1 telle que sa surface spécifique d'environ 100 à 1000 m²/g.

3. Précurseur hydraté d'alumine à porosité contrôlée selon l'une des revendications 1 ou 2 tel que son diagramme de diffraction des rayons X présente un signal intense situé à un déplacement correspondant à un angle de diffraction 2 Θ (thêta) inférieur à 5° et dont la formule chimique est du type
n S , m X, Al₂O₃, y H₂O
avec 0,01 <n<2 ; 0,001<m<0,2 ; 0,5<y<6
S est un tensioactif et X un anion apporté par une solution acide.

4. Procédé de synthèse d'alumine à porosité contrôlée selon l'une des revendications 1 ou 2 réalisé en milieu aqueux, **caractérisé en ce qu'**il comprend au moins une étape a) dans laquelle on prépare un précurseur de cette alumine par hydrolyse d'au moins une source inorganique anionique de l'aluminium en présence d'au moins un tensioactif, l'étape a) est réalisée dans un milieu solvant essentiellement aqueux dont le pH est supérieur au point isoélectrique de l'alumine, au moins une étape b) dans laquelle le précipité obtenu est séché à l'air à une température d'environ 40°C à 110°C pendant une durée d'environ 2 à 30 heures, et au moins une étape c) dans laquelle le précipité séché est calciné à une température suffisante pour éliminer les molécules de tensioactifs présentes dans le précurseur, que le tensioactif utilisé à l'étape a) comprend au moins tensioactif cationique choisi dans le groupe formé par les sels d'alkyl-ammonium, les sels d'alkylphosphonium, les sels d'alkylsulfonium, et qu'on ajoute aux réactifs de l'étape a) au moins un tensioactif anionique choisi dans le groupe formé par les alkylcarboxylates, les alkyl-sulfates, les alkyl-sulfonates, les alkylphényl-sulfonates, les alky-phosphates, les alkyl-phosphonates. La quantité de tensioactifs anioniques ajoutée est telle que la charge totale du mélange des tensioactifs ne devienne pas négative, la surface inorganique restant négative.

5. Procédé de synthèse d'alumine selon la revendication 4 tel que dans l'étape c) on augmente progressivement la température pendant une période d'environ 2 à 6 heures jusqu'à la température de calcination, puis on maintient cette température de calcination pendant une période de 1 à 4 heures, cette étape étant réalisée sous atmosphère inerte et telle que la température de calcination de l'étape c) est d'environ 400°C à 600°C.

6. Procédé de synthèse d'alumine en milieu aqueux selon l'une des revendications 4 ou 5 tel que la source inorganique anionique de l'aluminium utilisée est choisie dans le groupe formé par les aluminates de métaux alcalins.

7. Procédé de synthèse d'alumine en milieu aqueux selon la revendication 6 tel que l'aluminate de métal alcalin est l'aluminate de sodium.

8. Procédé de synthèse d'alumine en milieu aqueux selon l'une des revendications 4 à 7 **caractérisé en ce que** le ou les tensioactifs utilisés à l'étape a) comprend au moins un tensioactif non-ionique choisi dans le groupe formé par les oxydes d'alkylpolyéthylène, les oxydes d'alkylphényl-polyéthylène, les oxydes d'alkyl-phosphine, les oxydes d'alkylphosphine et les oxydes d'alkyl-amine.

9. Procédé de synthèse d'alumine en milieu aqueux selon l'une des revendications 4 à 8 **caractérisé en ce que** l'étape a) est effectuée en présence d'au moins un composé organique représentant environ 0,001 à 20 % en masse par rapport à la masse totale de solvant.

10. Procédé de synthèse d'alumine en milieu aqueux selon la revendication 9 **caractérisé en ce que** le composé organique est choisi dans le groupe formé par les alcanes dont la chaîne contient entre 5 et 20 atomes de carbone par molécule, les hydrocarbures aromatiques substitués par un ou plusieurs groupes hydrocarbonés, les alcools aliphatiques dont la chaîne contient entre 5 et 20 atomes de carbone par molécule et les amines aliphatiques dont la chaîne contient entre 5 et 20 atomes de carbone par molécule.

## Claims

1. An alumina with a controlled porosity and a pore diameter in the range 0.6 nm to 80 nm in which the total pore volume is in the range 1.00 cm³/g to 3.00 cm³/g and in which its X ray diffraction diagram has an intense signal situated at a displacement corresponding to a diffraction angle 2 θ (theta) of less than 5°.

2. An alumina with a controlled porosity according to claim 1, in which the specific surface area is about 100 to 1000 m²/g.

3. A hydrated precursor of an alumina with a controlled porosity according to any one of claims 1 or 2 in which its X ray diffraction diagram has an intense signal situated at a displacement corresponding to a diffraction angle 2 θ (theta) of less than 5° and in which the chemical formula is of the type
n S , m X, Al₂O₃, y H₂O
where wo 0,01 < n < 2 ; 0,001 < m < 0,2 ; 0,5 < y < 6
S is the surfactant and X is the anion supplied by the acidic solution.

4. A process for synthesising an alumina with a controlled porosity according to claims 1 or2 carried out in an aqueous medium, **characterized in that** it comprises at least one step a) in which a precursor of said alumina is prepared by hydrolysis of at least one anionic inorganic aluminium source in the presence of at least one surfactant, step a) being carried out in an essentially aqueous solvent medium the pH of which is higher than the isoelectric point of the alumina, at least one step b) in which the precipitate obtained is dried in air at a temperature of about 40°C to 110°C for a period of about 2 to 30 hours, and at least one step c) in which the dried precipitate is calcined at a temperature sufficient to eliminate the molecules of surfactants present in the precursor, that the surfactant used in step a) comprises at least one cationic surfactant selected from the group formed by alkylammonium salts, alkylphosphonium salts and alkylsulphonium salts, and in which that at least one anionic surfactant selected from the group formed by alkylcarboxylates, alkylsulphates, alkylsulphonates, alkylphenylsulphonates, alkylphosphates and alkylphosphonates is added to the reactants of step a), the quantity of added anionic surfactants being in which the total charge of the mixture of surfactants does not become negative, the inorganic surface remaining negative.

5. A process for synthesising an alumina according to claim 4, in which in step c), the temperature is gradually increased over a period of about 2 to 6 hours up to the calcining temperature, then that calcining temperature is maintained for a period of 1 to 4 hours, this step being carried out in an inert atmosphere, and in which the calcining temperature for step c) is about 400°C to 600°C.

6. A process for synthesising an alumna in an aqueous medium according to clam 4 or 5, in which the anionic inorganic aluminium source used in selected from the group formed by alkali metal aluminates.

7. A process for synthesising alumina in an aqueous medium according to claim 6, in which the alkali metal aluminate is sodium aluminate.

8. A process for synthesising alumina in an aqueous medium according to any one of claims 4 to 7, **characterized in that** the surfactant or surfactants used in step a) comprise at least one non ionic surfactant selected from the group formed by alkylpolyethylene oxides, alkylphenylpolyethylene oxides, alkylphosphine oxides and alkylamine oxides.

9. A process for synthesising alumina in an aqueous medium according to any one of claims 4 to 8, **characterized in that** step a) is carried out in the presence of at least one organic compound representing about 0.001 % to 20% by weight of the total solvent weight.

10. A process for synthesising alumina in an aqueous medium according to claim 9, **characterized in that** the organic compound is selected from the group formed by alkanes with a chain containing 5 to 20 carbon atoms per molecule, aromatic hydrocarbons substituted by one or more hydrocarbon groups, aliphatic alcohols with a chain containing 5 to 20 carbon atoms per molecule, and aliphatic amines with a chain containing 5 to 20 carbon atoms per molecule.

## Patentansprüche

1. Aluminiumoxid geregelter Porosität von einem Porendurchmesser zwischen 0,6 nm und 80 nm der Art, dass sein Porengesamtvolumen zwischen 1,00 cm³/g und 3,00 cm³/g beträgt und der Art, dass sein Röntgenstrahlbeugungsdiagramm ein starkes Signal aufweist, das sich auf einer Verschiebung entsprechend einem Beugungswinkel 2θ (Theta) kleiner als 5° befindet.

2. Aluminiumoxid mit geregelter Porosität gemäß Anspruch 1, der Art, dass seine spezifisch Oberfläche zwischen etwa 100 und 1000 m²/g liegt.

3. Hydratislerter Vorläufer von Aluminiumoxid geregelter Porosität gemäß einem der Ansprüche 1 oder 2, der Art, dass sein Röntgenstrahlbeugungsdiagramm ein starkes Signal aufweist, das auf einer Verschiebung entsprechend einem Beugungswinkel 2θ (Theta) kleiner als 5° angeordnet ist und dessen chemische Formel vom Typ
n S , m X, Al₂O₃, y H₂O
wo 0,01 < n < 2 ; 0,001 < m < 0,2 ; 0,5 < y < 6
ist, und S ein spannungsaktives Mittel und X ein durch eine saure Lösung eingeführtes Anion ist.

4. Verfahren zur Synthese von Aluminiumoxid geregelter Porosität gemäß einem der Ansprüche 1 oder 2, durchgeführt in wässriger Umgebung, **dadurch gekennzeichnet, dass** es wenigstens eine Stufe a) umfasst, in der man einen Vorläufer dieses Aluminiumoxids durch Hydrolyse wenigstens einer anionischen anorganisehen Quelle des Aluminiums in Anwesenheit wenigstens eines spannungsaktiven Mittels herstellt, wobei die Stufe a) in einer im Wesentlichen wässrigen Lösungsmittelumgebung durchgeführt wird, deren pH größer als der isoelektrische Punkt des Aluminiumoxids ist, weiter wenigstens eine Stufe b), in der das erhaltene Präzipitat unter Luft bei einer Temperatur von etwa 40°C bis 110°C über eine Dauer von etwa 2 bis 30 Stunden getrocknet wird und wenigstens eine Stufe c), in der das getrocknete Präzipitat bei einer ausreichenden Temperatur kalziniert wird, um die in dem Vorläufer vorhandenen spannungsaktiven Moleküle zu eliminieren, dass das in Stufe a) verwendete spannungsaktive Mittel wenigstens ein kationisches spannungsaktives Mittel umfasst, welches gewählt ist aus der Gruppe, die durch die Alkyl-Ammonium-, die Alkylphosphonium- und die Alkylsulfoniumsalze gebildet ist, und dass man den Reaktionsteilnehmern der Stufe a) wenigstens ein anionisches spannungsaktives Mittel zusetzt, das aus der Gruppe gewählt ist, welche gebildet wird durch die Alkyi-Carboxylate, die Alkyl-Sulfate, die Alkyl-Sulfonate, die Alkylphenyl-Sulfonate, die Alkyl-Phosphate und die Alkyl-Phosphonate. Die zugesetzte Menge an anionischen spannungsaktiven Mitteln ist von der Art, dass die Gesamtcharge des Gemisches an spannungsaktiven Mitteln nicht negativ wird, wobei die anorganische Oberfläche negativ verbleibt.

5. Verfahren zur Synthese von Aluminiumoxid gemäß Ansprüch 4, wobei in Stufe c) man allmählich die Temperatur über eine Dauer von etwa 2 bis 6 Stunden bis zur Kalzinierungstemperatur erhöht, dann diese Kalzinierungstemperatur über einen Zeitraum von 1 bis 4 Stunden aufrecbt erhält, wobei diese Stufe unter inerter Atmosphäre und derart realisiert wird, dass die Kalzinierungstemperatur der Stufe c) bei etwa 400 bis 600°C liegt.

6. Verfahren zur Synthese von Aluminiumoxid in wässriger Umgebung gemäß einen der Ansprüche 4 oder 5, der Art, dass die anionische anorganische Quelle des verwendeten Aluminiumoxids aus der Gruppe gewählt ist, die durch die Alkalimetallaluminate gebildet ist.

7. Verfahren zur Synthese von Aluminiumoxid in wässriger Umgebung gemäß Anspruch 6, der Art, dass das Alkalimetallaluminate Natriumaluminat ist.

8. Verfahren zur Synthese von Aluminiumoxid in wässriger Umgebung gemäß einem der Ansprüche 4 bis 7, **dadurch gekennzeichnet, dass** das oder die in Stufe a) verwendete(n) spannungsaktive(n) Mittel wenigstens ein nichtionisches spannungsaktives Mittel umfasst bzw. umfassen, das aus der Gruppe gewählt ist, welche durch die Oxide des Alkylpolyethylens, die Oxide des Alkylphenyl-Polyethylens, die Oxide des Alkyl-Phosphins, die Oxide des Alkylphosphins und die Oxide des Alkyl-Amins gebildet sind.

9. Verfahren zur Synthese von Aluminiumoxid in wässriger Umgebung gemäß einem der Ansprüche 4 bis 8, **dadurch gekennzeichnet, dass** die Stufe a) in Anwesenheit wenigstens einer organischen Verbindung durchgeführt wird, die in etwa 0,001 bis 20 Massen-%. bezogen auf die Gesamtmasse des Lösungsmittels, darstellt.

10. Verfahren zur Synthese von Aluminiumoxid in wässriger Umgebung gemäß Anspruch 9, **dadurch gekennzeichnet, dass** die organische Verbindung aus der Gruppe gewählt ist, die gebildet ist durch die Alkane, deren Kette zwischen 5 und 20 Kohlenstoffatome pro Molekül enthält, die aromatischen Kohlenwasserstoffe, die durch eine oder mehrere kohlenwasserstoffhaltige Gruppe(n) substituiert ist bzw. sind, de aliphatischen Alkohole, deren Kette zwischen 5 und 20 Kohlenstoffatome pro Molekül enthält und die aliphatischen Amine, deren Kette zwischen 5 und 20 Kohlenstoffatome pro Molekül enthält.
